(19) Europäisches Patentamt / European Patent Office / Office européen des brevets

(11) **EP 2 653 888 B1**

(12) **FASCICULE DE BREVET EUROPEEN**

(45) Date de publication et mention de la délivrance du brevet:
**05.12.2018 Bulletin 2018/49**

(51) Int Cl.:
*G01S 13/34* (2006.01)  *G01S 13/88* (2006.01)
*G01S 7/02* (2006.01)

(21) Numéro de dépôt: **13164523.6**

(22) Date de dépôt: **19.04.2013**

(54) **Système de radio altimétrie adapté pour fonctionner dans une installation de radio altimétrie duale**

Höhenmessungsfunksystem für den Gebrauch in einer Funkanlage mit dualer Höhenmessung

Radio altimeter system capable of operating in a dual radio altimeter system

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **20.04.2012 FR 1201174**

(43) Date de publication de la demande:
**23.10.2013 Bulletin 2013/43**

(73) Titulaire: **Thales**
**92200 Neuilly Sur Seine (FR)**

(72) Inventeurs:
• **Lys, Sébastien**
  **92622 Gennevilliers Cedex (FR)**
• **André, Jean-Jacques**
  **92622 Gennevilliers Cedex (FR)**

(74) Mandataire: **Lavoix**
**2, place d'Estienne d'Orves**
**75441 Paris Cedex 09 (FR)**

(56) Documents cités:
JP-A- 2000 206 234     US-A- 4 106 018
US-A1- 2004 130 482    US-A1- 2010 085 233
US-A1- 2010 103 023

**Description**

La présente invention concerne un système de radio altimétrie apte à être fixé à un aéronef et à fournir une distance dudit aéronef par rapport à une surface, adapté pour fonctionner dans une installation de radio altimétrie duale comportant deux tels systèmes de radio altimétrie.

Des systèmes de radio altimétrie, utilisés dans le domaine de l'aéronautique civile ou militaire, sont plus généralement connus sous le nom de radioaltimètres.

Un radioaltimètre est un instrument installé à bord d'un aéronef et apte à fournir la hauteur de l'aéronef par rapport au sol ou à une surface survolée. Un radioaltimètre est en particulier utilisé pendant les phases de vol automatique ou les phases de vol critiques, telles que l'approche, l'atterrissage et le décollage. La mesure de hauteur fournie par le radioaltimètre peut par ailleurs être utilisée pour diverses applications calculatoires mises en oeuvre par ordinateur de bord, comme par exemple le recalage de la position de l'aéronef par rapport à une carte pré-établie du terrain survolé.

Dans l'état de la technique, on connaît différents types de radioaltimètres, le principe général de tels instruments étant de mesurer la hauteur en mesurant le temps de propagation de signaux radioélectriques émis et reçus après réflexion au sol.

En particulier, il est connu d'utiliser l'émission continue d'onde radioélectrique modulée en fréquence par un signal de modulation comportant des rampes, à pente sensiblement linéaire, selon une excursion de fréquence ou pente $\delta F$, connue sous le nom de modulation FMCW pour « frequency-modulated continuous wave ». Dans le domaine civil, la bande de fréquence utilisé est de 4.2 à 4.4 GHz. Après réflexion sur le sol, une onde radioélectrique réfléchie est reçue en écho après une durée $\tau$ qui est fonction de la hauteur de l'aéronef et permet donc de calculer cette hauteur.

Afin d'assurer la sécurité et le bon fonctionnement dans les phases de vol critique ou les phases de vol automatique, notamment pour le transport de passagers, il est courant de positionner deux radioaltimètres sur un aéronef.

Le fait de positionner deux radioaltimètres sur un aéronef peut induire des interférences, l'onde radioélectrique émise par un radioaltimètre pouvant être captée comme onde radioélectrique réfléchie par l'autre radioaltimètre. Ce type d'interférences entre les deux systèmes de radio altimétrie induit potentiellement des erreurs de mesure de la hauteur de l'aéronef.

Afin de réduire ces perturbations, une solution connue de l'état de la technique consiste à positionner les systèmes de radio altimétrie, et en particulier leurs antennes d'émission/réception, selon des recommandations de distance, comme préconisées par exemple par le standard ARINC707, permettant d'assurer le découplage complet des ondes radioélectriques émises et réfléchies. Cependant, ces recommandations sont difficiles à respecter sur des petits aéronefs, tels des drones. De plus, il est possible, malgré le respect des recommandations, de rencontrer des interférences pour certaines configurations du terrain survolé.

Alternativement, il est connu dans l'état de la technique de prévoir des radioaltimètres fonctionnant avec des signaux de modulation à pente fixe, mais dont la durée des rampes ou la fréquence centrale des rampes est modifiée. Ces fonctionnements différents étant prédéfinis, la configuration du signal de modulation doit être fixée à la fabrication. Par conséquent, un coût supplémentaire est induit par la fabrication différenciée de tels systèmes en vue de leur utilisation dans une installation duale.

Le document US4106018 décrit un système de radio altimétrie apte à être fixé à un aéronef, adapté pour fonctionner dans une installation duale.

Le document US2004/130482 A1 décrit un système de radio altimétrie dual.

L'invention a pour objet de remédier aux inconvénients de l'état de la technique, permettant de fournir des systèmes de radio altimétrie fiables dans une installation à deux tels systèmes, tout en évitant un surcoût de fabrication de tels systèmes.

A cet effet, selon un premier aspect, l'invention propose un système de radio altimétrie apte à être fixé à un aéronef et à fournir une distance dudit aéronef par rapport à une surface, adapté pour fonctionner dans une installation de radio altimétrie duale comportant deux tels systèmes de radio altimétrie, ledit système de radio altimétrie comportant un générateur d'onde radioélectrique modulée en fréquence par un signal de modulation comportant des rampes de variation de fréquence selon une excursion de fréquence définie par au moins un paramètre.

Le système de radio altimétrie comporte des moyens d'obtention d'un identifiant permettant de distinguer ledit système de radio altimétrie de l'autre système de radio altimétrie de ladite installation duale, et des moyens de sélection dudit au moins un paramètre définissant l'excursion en fréquence du signal de modulation en fonction de l'identifiant obtenu.

Avantageusement, le système de radio altimétrie selon l'invention est paramétrable dynamiquement, dans la mesure où les rampes de variation de fréquence sont paramétrables selon l'identifiant du système obtenu lors de la mise en fonctionnement. Ainsi, un tel système peut être utilisé seul ou dans une installation à deux systèmes de radio altimétrie, la sécurité de fonctionnement étant assurée dans ce cas. Il n'est pas nécessaire de mettre en oeuvre une fabrication différenciée pour chaque système de radio altimétrie dans une installation à deux tels systèmes.

Selon un mode de réalisation particulièrement avantageux, l'excursion de fréquence est définie par une valeur de variation de fréquence $\Delta F$ prédéterminée et par un sens de variation positif ou négatif associé, et ledit paramètre définit ledit sens de variation. Ainsi, lorsque deux tels systèmes de radio altimétrie sont utilisés dans une installation sur un même aéronef, l'un émettra une onde radioélectrique modulée par un signal à rampe montante, et l'autre émettra une onde radioélectrique modulée par un signal à rampe descendante, ce qui permet de minimiser les interférences potentielles dans tous les cas de figure.

Le système de radio altimétrie selon l'invention peut présenter une ou plusieurs des caractéristiques ci-dessous :

- l'identifiant est un nombre ayant une valeur parmi deux valeurs possibles ;
- il comporte en outre des moyens de réception d'onde radioélectrique, des moyens de soustraction de l'onde radioélectrique émise et de l'onde radioélectrique reçue pour former un signal de battement et des moyens de filtrage dudit signal de battement ;
- lesdits moyens de filtrage sont aptes à filtrer ledit signal de battement dans une bande de fréquence prédéterminée ;
- les moyens d'obtention de l'identifiant comportent des moyens de lecture d'un identifiant introduit par un opérateur via une interface adaptée.

Selon un deuxième aspect, l'invention concerne une installation de radio altimétrie comportant deux systèmes de radio altimétrie tels que brièvement décrits ci-dessus.

D'autres caractéristiques et avantages de l'invention ressortiront de la description qui en est donnée ci-dessous, à titre indicatif et nullement limitatif, en référence aux figures annexées, parmi lesquelles :

- la figure 1 illustre schématiquement un aéronef équipé d'une installation à deux systèmes de radio altimétrie ;
- la figure 2 illustre graphiquement une onde radioélectrique émise et reçue par un système de radio altimétrie de type FMCW et le signal de battement théorique extrait ;
- la figure 3 illustre les ondes radioélectriques émises par les deux systèmes de radio altimétrie selon une mise en oeuvre de l'invention ;
- la figure 4 illustre l'interférence entre les deux systèmes de radio altimétrie dans la mise en oeuvre de la figure 3, et
- la figure 5 est un synoptique d'un système de radio altimétrie selon un mode de réalisation de l'invention.

L'invention sera décrite plus particulièrement dans le cas où le système de radio altimétrie est un radioaltimètre, apte à fournir une mesure de distance par rapport au sol ou à une surface survolée par un aéronef, par exemple un avion ou un hélicoptère.

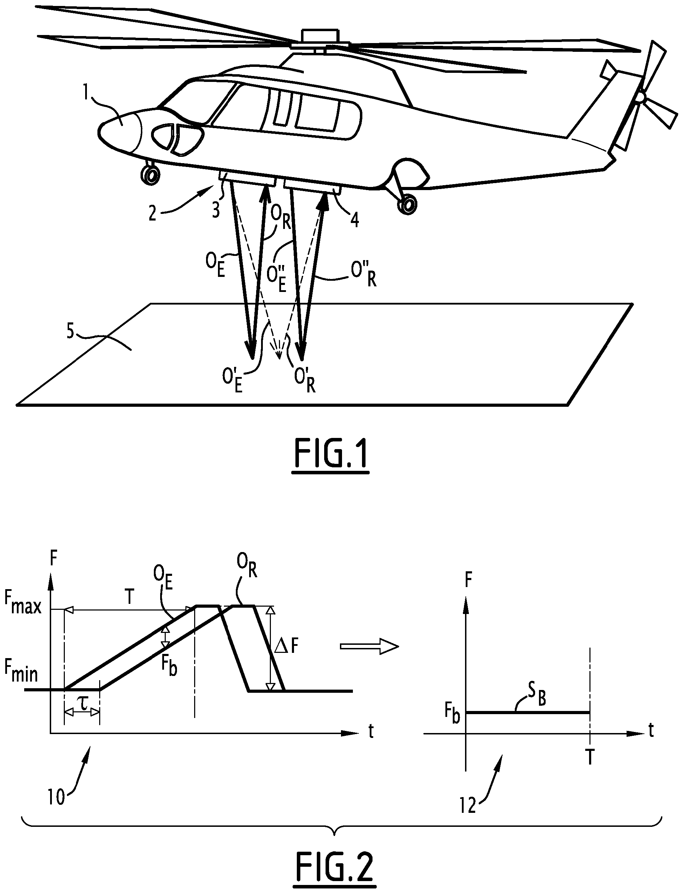

La figure 1 illustre de manière schématique un aéronef 1 muni d'une installation de radio altimétrie 2 comportant deux radioaltimètres 3 et 4, apte à émettre chacun, via une antenne d'émission, une onde radioélectrique ou un faisceau d'ondes radioélectriques émises notées $O_E$, chaque onde radioélectrique émise étant modulée en fréquence, par exemple selon un signal comportant des rampes de variation de fréquence s'échelonnant entre une valeur $F_{min}$ et une valeur $F_{max}$, selon une excursion de fréquence $\Delta F = abs(F_{max}-F_{min})$, où *abs* représente la valeur absolue, comme représenté schématiquement dans le graphe représenté à la figure 2. Les ondes radioélectriques $O_E$ se réfléchissent sur le sol 5, et produisent des ondes réfléchies $O_R$.

Sur la figure 1 est également illustré le phénomène d'interférence qui peut potentiellement se produire : une onde radioélectrique $O'_E$ émise par le radioaltimètre 3 est réfléchie et reçue par le radioaltimètre 4 comme onde reçue $O'_R$, et elle est traitée par le radioaltimètre 4 comme une onde réfléchie en réponse à une autre onde radioélectrique $O''_E$ émise par le radioaltimètre 4, ce qui crée des erreurs de mesure.

En fonctionnement nominal, comme illustré à la figure 2, un radioaltimètre de type FMCW émet une onde radioélectrique modulée selon une rampe de fréquence ayant une excursion de fréquence $\Delta F$. Dans l'exemple de la figure 2, la rampe de fréquence illustrée dans le graphe temps-fréquence 10 est une rampe montante, de pente positive, de durée temporelle T, typiquement aux alentours de 50 ms.

La rampe montante est suivie d'un palier haut, d'une rampe descendante, d'un palier bas de durée prédéterminée ou variable, puis la même séquence » rampe montante - palier haut - rampe descendante - palier bas » est répétée (la répétition de la rampe n'est pas illustrée à la figure 2).

Une forme d'onde réfléchie $O_R$ est reçue en écho, après réflexion sur le sol, avec un décalage temporel de $\tau$ ms. Ainsi, à un instant temporel t, la différence fréquentielle entre l'onde émise et l'onde reçue est de $F_b$. Cette différence de fréquence est appelée fréquence de battement. Le signal de battement $S_B$ est illustré dans le graphe temps-fréquence 12 de la figure 2.

Théoriquement, si la surface survolée est plane, la fréquence de battement est constante pendant toute la durée T d'émission de la rampe montante. La mesure de la fréquence de battement permet de calculer la hauteur H par rapport à la surface survolée, étant donné les formules :

$$H = \frac{c \times \tau}{2}$$

où c est la vitesse de la lumière.

On en déduit une mesure de la hauteur H à partir de la fréquence de battement $F_b$:

$$H = \frac{c}{2} \times \frac{T}{\Delta F} \times F_b$$

On comprend que la fréquence de battement $F_b$ extraite est erronée dans le cas où l'onde reçue utilisée n'est pas l'onde effectivement réfléchie en écho à l'onde émise, mais une onde de forme analogue émise par l'autre système de radio altimétrie, et qu'il s'ensuit une mesure de hauteur H erronée.

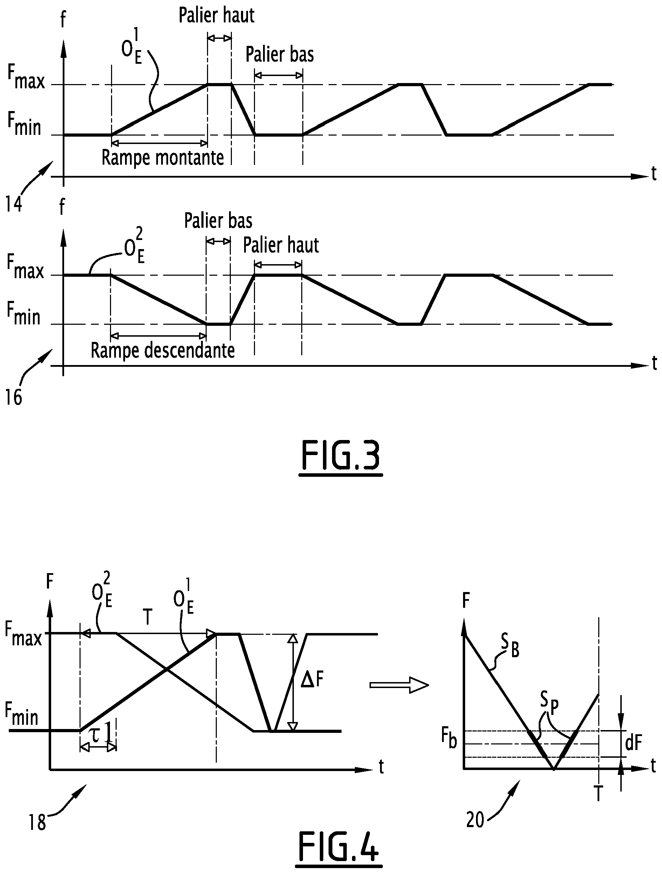

Selon un mode de réalisation de l'invention illustré à la figure 3, il est proposé de différencier suffisamment les ondes émises respectivement par chaque système de radio altimétrie de l'installation duale 2, tout en conservant la même performance pour chacun de ces systèmes lorsqu'il est utilisé seul.

Selon ce mode de réalisation, l'onde $O_E^1$ émise par le premier système de radio altimétrie 3 de l'installation de radio altimétrie 2 et l'onde $O_E^2$ émise par le deuxième système de radio altimétrie 4 de l'installation de radio altimétrie 2 ont des pentes de signes inversés, tout en présentant des rampes de même excursion de fréquence $\Delta$F entre les mêmes bornes $F_{max}$ et $F_{min}$, et une même durée d'émission de rampe de fréquence T.

Le paramétrage de la configuration en rampe montante ou rampe descendante d'un générateur d'un système de radio altimétrie se fait dynamiquement à la mise en fonctionnement, en fonction d'un identifiant qui est obtenu lors de cette mise en fonctionnement. Le paramètre qui est ici le signe positif ou négatif du sens de variation de la rampe entre les fréquences $F_{min}$ et $F_{max}$ est sélectionné en fonction de cet identifiant.

De préférence, l'identifiant est une valeur discrète codée par exemple sur un bit pour différencier entre deux systèmes. Selon un mode de réalisation, l'identifiant est un identifiant SDI (pour « Source Destination Identifier ») tel que défini dans le standard ARINC 707.

Avantageusement, la différentiation fonctionnelle des systèmes de radio altimétrie se fait uniquement lors de l'utilisation, leur mise au point initiale étant identique, ce qui réduit les coûts de fabrication, aucune différentiation n'étant à prévoir à la fabrication.

La figure 3 illustre en parallèle, par des graphes temps-fréquence notés respectivement 14 et 16, les ondes $O_E^1$ et $O_E^2$ respectivement émises par les deux systèmes de radio altimétrie 3 et 4 : une rampe montante pour $O_E^1$ correspond à une rampe descendante pour $O_E^2$, un palier haut pour $O_E^1$ correspond à un palier bas pour $O_E^2$. Même lorsqu'il y a un décalage entre les instants de départ des rampes montante et descendante respectives, les ondes restent suffisamment différenciées pour éviter une erreur de mesure de la hauteur ultérieure, comme illustré à la figure 4.

En effet, à la figure 4 est illustré, dans le graphe temps-fréquence 18, le mélange d'une onde $O_E^1$ émise par le premier système de radio altimétrie 3 et d'une onde $O_E^2$, reçue avec un décalage temporel de $\tau$1, issue du

deuxième système de radio altimétrie 4, qui est soit l'onde émise par ce deuxième, soit une onde réfléchie issue d'une onde émise par ce deuxième système.

Le signal de battement $S_B$ issu du mélange de ces deux ondes est illustré dans le graphe temps-fréquence 20.

La fréquence du signal de battement $S_B$ ainsi obtenu est variable, comme illustré dans le graphe 20.

En fonctionnement usuel, un système de radio altimétrie effectue un filtrage du signal de battement obtenu par mélange homodyne des ondes émise et reçue, le filtrage conservant le signal dans une bande de fréquence dF autour de $F_b$, les valeurs de dF et de $F_b$ étant connues de par les spécifications du système de radio altimétrie, en particulier la hauteur maximale mesurable.

Par conséquent les parties du signal de battement dont la fréquence est située en dehors de la plage de filtrage sont filtrées, seules restant les portions $S_P$, qui ont des contributions minimales par rapport au signal de battement issu effectivement du mélange entre onde émise et onde réfléchie du radioaltimètre, tel que représenté préalablement à la figure 2, et dont le spectre utile s'étend sur toute la durée T d'analyse.

Avantageusement, la perturbation de la mesure de hauteur est minimale dans ce mode de réalisation dans lequel les sens de variation des rampes émises par les deux systèmes de radio altimétrie sont inversés.

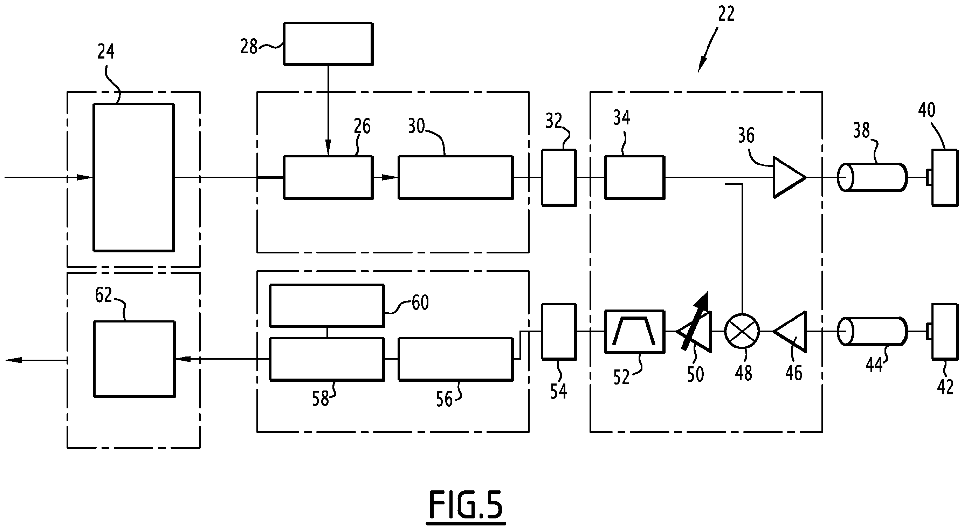

La figure 5 est un synoptique d'un système de radio altimétrie 22 selon un mode de réalisation de l'invention.

Le système de radio altimétrie 22 comporte un module 24 d'interface de démarrage, adapté à mettre en forme des informations d'initialisation fournies par exemple par un opérateur.

Il comporte également un module 26 d'obtention d'un identifiant, l'identifiant étant introduit par des moyens 28 appropriés, par exemple par une interface graphique présentée à un opérateur lors de l'installation du système ou un bouton positionnable par l'opérateur.

Dans un mode de réalisation, l'identifiant est une valeur numérique discrète codée sur un seul bit, ce qui permet de différencier entre deux systèmes de radio altimétrie, par exemple en assignant l'identifiant 0 à un des systèmes, dit premier système, et l'identifiant 1 à l'autre système, dit deuxième système. Cette valeur numérique discrète est renseignée à l'installation, insérée dans une structure de données appropriée mémorisée dans un registre, et lue lors de la mise en fonctionnement de chaque système.

L'identifiant obtenu est utilisé pour sélectionner un paramètre de l'excursion de fréquence des rampes du signal de modulation dans un module 30 de génération de signal modulé qui est composé d'une répétition de séquences de rampes/paliers comme illustré dans les figures 2 et 3.

Par exemple, conformément au mode de réalisation décrit en référence aux figures 3 et 4, le sens de variation de l'excursion en fréquence ou signe de pente de la rampe est sélectionné en fonction de l'identifiant obtenu par le module 26. Par exemple, on associe une rampe à pente montante à l'identifiant 0 et une rampe à pente descendante à l'identifiant 1.

Un module de conversion numérique-analogique 32 convertit le signal modulé obtenu par le module 30 en signal analogique ou onde radioélectrique.

Un module 34, réalisé par exemple par un oscillateur VCO, transforme l'onde radioélectrique issue du module 32 en onde à rampe de fréquence, qui est ensuite amplifiée par l'amplificateur 36. L'antenne d'émission 38 couplée à un émetteur 40 effectue l'émission de l'onde radioélectrique $O_E$ modulée en fréquence.

Côté réception, un récepteur 42 couplé à une antenne de réception 44 est apte à recevoir l'onde radioélectrique réfléchie $O_R$. Un amplificateur 46 amplifie l'onde reçue.

Un module 48 de génération du signal de battement $S_B$ effectue la soustraction de l'onde radioélectrique $O_E$ émise et l'onde radioélectrique reçue $O_R$, réalisé typiquement, de façon connue, par un mélangeur homodyne.

Le signal de battement $S_B$ est ensuite amplifié par un amplificateur 50, puis filtré par un module de filtrage 52. Comme expliqué ci-dessus, le filtrage consiste à ne conserver que le signal dont le spectre est contenu dans une bande de fréquence $[f_{min}, f_{max}]$ prédéterminée, où $abs(f_{max}-f_{min})=dF$.

Une conversion analogique-numérique 54 est ensuite effectuée, puis le signal numérique obtenu est fourni à un module de transformation spectrale 56, qui applique par exemple une transformation de Fourier (FFT), puis le résultat de la transformation est fourni au module 58 d'extraction de la fréquence de battement, suivi de l'application du calcul de la hauteur estimée par le module 60. Le résultat du calcul de la hauteur ou distance de l'aéronef par rapport au sol, et éventuellement des alarmes et d'autres informations sont fournies à l'opérateur ou à une application utilisatrice via une interface 62.

**Revendications**

1. Système de radio altimétrie apte à être fixé à un aéronef et à fournir une distance dudit aéronef par rapport à une surface, adapté pour fonctionner dans une installation (2) de radio altimétrie duale comportant deux tels systèmes de radio altimétrie, ledit système de radio altimétrie comportant un générateur d'onde radioélectrique modulée en fréquence par un signal de modulation comportant des rampes de variation de fréquence selon une excursion de fréquence définie par au moins un paramètre,

   comportant des moyens (26) d'obtention d'un identifiant permettant de distinguer ledit système de radio altimétrie de l'autre système de radio altimétrie de ladite installation duale (2),

et des moyens de sélection (30) dudit au moins un paramètre définissant l'excursion en fréquence du signal de modulation en fonction de l'identifiant obtenu,

   **caractérisé en ce que** l'obtention d'un identifiant est effectuée lors d'une mise en fonctionnement et **en ce que** l'excursion de fréquence est définie par une valeur de variation de fréquence $\Delta F$ prédéterminée et par un sens de variation positif ou négatif associé aux rampes de variation de fréquence, ledit paramètre définissant ledit sens de variation.

2. Système de radio altimétrie selon la revendication 1, **caractérisé en ce que** l'identifiant est un nombre ayant une valeur parmi deux valeurs possibles.

3. Système de radio altimétrie selon l'une des revendications précédentes, **caractérisé en ce qu'**il comporte en outre des moyens de réception (42, 44) d'onde radioélectrique, des moyens de soustraction (48) de l'onde radioélectrique émise et de l'onde radioélectrique reçue pour former un signal de battement et des moyens de filtrage (52) dudit signal de battement.

4. Système de radio altimétrie selon la revendication 3, **caractérisé en ce que** lesdits moyens de filtrage sont aptes à filtrer ledit signal de battement dans une bande de fréquence prédéterminée.

5. Système de radio altimétrie selon l'une des revendications précédentes, **caractérisé en ce que** les moyens d'obtention (26) de l'identifiant comportent des moyens de lecture d'un identifiant introduit par un opérateur via une interface (28) adaptée.

6. Installation de radio altimétrie (2) comportant deux systèmes de radio altimétrie selon l'une des revendications 1 à 5.

**Patentansprüche**

1. System zur Funkhöhenmessung, das imstande ist, an einem Luftfahrzeug befestigt zu werden und einen Abstand des Luftfahrzeugs bezüglich einer Oberfläche zu liefern, und das angepasst ist zum Arbeiten in einer dualen Installation (2) zur Funkhöhenmessung, die zwei solche Systeme zur Funkhöhenmessung aufweist, wobei das System zur Funkhöhenmessung aufweist einen Generator einer elektromagnetischen Welle, die frequenzmoduliert ist durch ein Modulationssignal, das Frequenzvariationsrampen gemäß einer Frequenzabweichung aufweist, die durch wenigstens einen Parameter definiert ist,

   aufweisend Mittel (26) zur Erlangung einer Kennung, die es erlaubt, das besagte System zur Höhenmessung von dem anderen System zur Höhenmessung der besagten dualen Installation (2) zu unterscheiden,

und Mittel zur Auswahl (30) des besagten wenigstens einen Parameters, der die Frequenzabweichung des Modulationssignals in Abhängigkeit von der erlangten Kennung definiert, **dadurch gekennzeichnet, dass** das Erlangen einer Kennung durchgeführt wird während eines Arbeitsbeginns und dass die Frequenzabweichung definiert ist durch einen vorbestimmten Frequenzvariations-Wert ΔF und durch eine positive oder negative Variationsrichtung, die mit den Frequenzvariationsrampen assoziiert ist, wobei der Parameter die besagte Variationsrichtung definiert.

2. System zur Funkhöhenmessung gemäß Anspruch 1, **dadurch gekennzeichnet, dass** die Kennung eine Zahl ist, die einen Wert unter zwei möglichen Werten hat.

3. System zur Funkhöhenmessung gemäß einem der vorhergehenden Ansprüche, **dadurch gekennzeichnet, dass** es ferner aufweist Mittel zum Empfang (42, 44) einer elektromagnetischen Welle, Mittel zur Subtraktion (48) der ausgesandten elektromagnetischen Welle und der empfangenen elektromagnetischen Welle zum Bilden eines Mischsignals und Mittel zum Filtern (52) des besagten Mischsignals.

4. System zur Funkhöhenmessung gemäß Anspruch 3, **dadurch gekennzeichnet, dass** die Mittel zum Filtern angepasst sind zum Filtern des besagten Mischsignals in einem vorbestimmten Frequenzband.

5. System zur Funkhöhenmessung gemäß einem der vorhergehenden Ansprüche, **dadurch gekennzeichnet, dass** die Mittel zur Erlangung (26) der Kennung aufweisen Mittel zum Lesen einer Kennung, die von einem Bediener mittels einer angepassten Schnittstelle (28) eingegeben wurde.

6. Installation zur Funkhöhenmessung (2), aufweisend zwei Systeme zur Funkhöhenmessung gemäß einem der Ansprüche 1 bis 5.

**Claims**

1. A radio altimetry system that can be fixed to an aircraft and provide the distance of that aircraft from a surface, capable of operating in a dual radio altimetry installation (2) including two such radio altimetry systems, said radio altimetry system including a frequency-modulated radio wave generator using a modulation signal including frequency variation ramps according to a frequency swing defined by at least one parameter,

comprising means (26) for obtaining an identifier making it possible to distinguish said radio altimetry system from the other radio altimetry system of said dual installation (2),

and means (30) for selecting said at least one parameter defining the frequency swing of the modulation signal as a function of the obtained identifier, **characterized in that** the obtaining of an identifier is carried out at startup and **in that** the frequency swing is defined by a predetermined frequency variation value ΔF and by an associated positive or negative variation direction associated to the frequency variation ramps, said parameter defining said variation direction.

2. The radio altimetry system according to claim 1, **characterized in that** the identifier is a number having a value from among two possible values.

3. The radio altimetry system according to one of the preceding claims, **characterized in that** it further includes means (42, 44) for receiving radio waves, means (48) for subtracting the transmitted radio wave and the received radio wave to form a beat signal and means (52) for filtering said beat signal.

4. The radio altimetry system according to claim 3, **characterized in that** said filtering means are capable of filtering said beat signal in a predetermined frequency band.

5. The radio altimetry system according to one of the preceding claims, **characterized in that** the means (26) for obtaining the identifier include means for reading an identifier introduced by an operator using a suitable interface (28).

6. A radio altimetry installation (2) including two radio altimetry systems according to one of claims 1 to 5.

## FIG.1

## FIG.2

FIG.3

FIG.4

FIG.5

EP 2 653 888 B1

**EP 2 653 888 B1**

## RÉFÉRENCES CITÉES DANS LA DESCRIPTION

**Documents brevets cités dans la description**

- US 4106018 A

- US 2004130482 A1